# EUROPEAN PATENT APPLICATION

(11) **EP 4 814 754 A1**
(43) Date of publication of application: **30.09.2026**
(21) Application number: 24893452.3
(22) Date of filing: 20.11.2024
(51) Int. Cl.: G06F 16/957

(54) **INTERFACE DISPLAY METHOD AND APPARATUS, AND ELECTRONIC DEVICE AND STORAGE MEDIUM**

(30) Priority: 20.11.2023 CN 202311553529
(71) Applicant: Beijing Zitiao Network Technology Co., Ltd., Beijing 100190 (CN)
(72) Inventor: YANG, Jiahui, Beijing 100028 (CN)
(74) Representative: Grünecker Patent- und Rechtsanwälte PartG mbB
(86) International application number: PCT/CN2024/133156
(87) International publication number: WO 2025/108295

(57) **Abstract**

Embodiments of the present disclosure provide an interface display method and apparatus, an electronic device, and a storage medium. The method includes: receiving a display operation for a preset interface; in response to the display operation, displaying the preset interface, and displaying a preset user set in the preset interface, where the preset user set includes at least one preset user, the preset user includes a current user and at least one associated user of the current user, and the preset user set is used to trigger display of media content posted by the preset user in a media content display interface and/or to trigger generation of media content; and in response to a state switch instruction for the preset user set, switching a display state of the preset user set.

## Description

### CROSS-REFERENCE TO RELATED APPLICATION(S)

The present application claims priority to Chinese Patent Application No. 202311553529.1, filed on November 20, 2023, and entitled "INTERFACE DISPLAY METHOD AND APPARATUS, AND ELECTRONIC DEVICE AND STORAGE MEDIUM", which is hereby incorporated by reference in its entirety.

### FIELD

Embodiments of the present disclosure relate to the field of computer technologies, and in particular, to an interface display method and apparatus, an electronic device, and a storage medium.

### BACKGROUND

At present, in some media content platforms, users may post works or view works posted by friends.

### SUMMARY

Embodiments of the present disclosure provide an interface display method and apparatus, an electronic device, and a storage medium.

In a first aspect, an embodiment of the present disclosure provides an interface display method, including:
receiving a display operation for a preset interface;
displaying, in response to the display operation, the preset interface, and displaying a preset user set in the preset interface, where the preset user set includes at least one preset user, the preset user includes a current user and at least one associated user of the current user, and the preset user set is used to trigger display of media content posted by the preset user in a media content display interface and/or to trigger generation of media content; and
switching, in response to a state switch instruction for the preset user set, a display state of the preset user set.

In a second aspect, an embodiment of the present disclosure further provides an interface display apparatus, including:
an operation receiving module, configured to receive a display operation for a preset interface;
a preset interface display module, configured to, in response to the display operation, display the preset interface, and display a preset user set in the preset interface, where the preset user set includes at least one preset user, the preset user includes a current user and at least one associated user of the current user, and the preset user set is used to trigger display of media content posted by the preset user in a media content display interface and/or to trigger generation of media content; and
a state switch module, configured to, switch, in response to a state switch instruction for the preset user set, a display state of the preset user set.

In a third aspect, an embodiment of the present disclosure further provides an electronic device, including:
one or more processors; and
a memory, configured to store one or more programs,
where the one or more programs, when executed by the one or more processors, cause the one or more processors to implement the interface display method according to the embodiments of the present disclosure.

In a fourth aspect, an embodiment of the present disclosure further provides a computer-readable storage medium, on which a computer program is stored, where the program, when executed by a processor, implements the interface display method according to the embodiments of the present disclosure.

The embodiments of the present disclosure provide an interface display method and apparatus, an electronic device, and a storage medium. The method includes: receiving a display operation for a preset interface; in response to the display operation, displaying the preset interface, and displaying a preset user set in the preset interface, where the preset user set includes at least one preset user, the preset user includes a current user and at least one associated user of the current user, and the preset user set is used to trigger display of media content posted by the preset user in a media content display interface and/or to trigger generation of media content; and in response to a state switch instruction for the preset user set, switching a display state of the preset user set.

### BRIEF DESCRIPTION OF THE DRAWINGS

The above and other features, advantages, and aspects of the embodiments of the present disclosure will become more apparent in combination with the drawings and with reference to the following specific implementations. Throughout the drawings, the same or similar reference numerals denote the same or similar elements. It should be understood that the drawings are schematic and that parts and elements are not necessarily drawn to scale.
FIG. 1 is a schematic flowchart of an interface display method according to an embodiment of the present disclosure;
FIG. 2 is a schematic diagram showing display of a preset user set in a first state according to an embodiment of the present disclosure;
FIG. 3 is a schematic diagram showing display of a preset user set in a second state according to an embodiment of the present disclosure;
FIG. 4 is a schematic flowchart of another interface display method according to an embodiment of the present disclosure;
FIG. 5 is a schematic diagram showing display of another preset user set in a first state according to an embodiment of the present disclosure;
FIG. 6 is a schematic diagram showing display of still another preset user set in a first state according to an embodiment of the present disclosure;
FIG. 7 is a schematic diagram showing display of another preset user set in a second state according to an embodiment of the present disclosure;
FIG. 8 is a block diagram of an interface display apparatus according to an embodiment of the present disclosure; and
FIG. 9 is a schematic structural diagram of an electronic device according to an embodiment of the present disclosure.

### DETAILED DESCRIPTION OF EMBODIMENTS

The embodiments of the present disclosure will be described in more detail below with reference to the drawings. Although some embodiments of the present disclosure are shown in the drawings, it should be understood that the present disclosure may be implemented in various forms and should not be interpreted as being limited to the embodiments set forth herein. Instead, these embodiments are provided for a more thorough and complete understanding of the present disclosure. It should be understood that the drawings and embodiments of the present disclosure are only for exemplary purposes and are not intended to limit the protection scope of the present disclosure.

It should be understood that steps described in method implementations of the present disclosure may be performed in different orders and/or in parallel. In addition, the method implementations may include additional steps and/or omit performing the illustrated steps. The scope of the present disclosure is not limited in this respect.

As used herein, the term "include/comprise" and its variations are open-ended inclusions, that is, "include/comprise but not limited to". The term "based on" is "at least partially based on". The term "one embodiment" means "at least one embodiment"; the term "another embodiment" means "at least one another embodiment"; and the term "some embodiments" means "at least some embodiments". Relevant definitions of other terms will be given in the following description.

It should be noted that concepts such as "first" and "second" mentioned in the present disclosure are only used to distinguish different apparatuses, modules, or units, and are not used to limit an order or interdependence of functions performed by these apparatuses, modules, or units.

It should be noted that modifications of "one" and "a plurality of" mentioned in the present disclosure are illustrative rather than restrictive, and those skilled in the art should understand that unless otherwise clearly indicated in the context, they should be understood as "one or more".

The names of messages or information exchanged between a plurality of apparatuses in the implementations of the present disclosure are only for illustrative purposes, and are not intended to limit the scope of these messages or information.

It may be understood that before using the technical solutions disclosed in the embodiments of the present disclosure, the user should be informed of the type, range of use, use scenarios, etc., of personal information involved in the present disclosure, and the authorization of the user should be obtained in an appropriate manner in accordance with relevant laws and regulations.

For example, in response to the reception of an active request from a user, prompt information is sent to the user to clearly prompt the user that the requested operation will require access to and use of personal information of the user. As such, the user may independently choose, based on the prompt information, whether to provide the personal information to software or hardware, such as an electronic device, an application, a server, or a storage medium, that performs the operations of the technical solutions of the present disclosure.

As an optional but non-limiting implementation, in response to the reception of the active request from the user, the prompt information may be sent to the user in the form of, for example, a pop-up window, in which the prompt information may be presented in text. In addition, the pop-up window may also include a selection control for the user to choose whether to "agree" or "disagree" to provide the personal information to the electronic device.

It may be understood that the above process of notifying and obtaining user authorization is only illustrative and does not limit the implementations of the present disclosure, and other manners that satisfy the relevant laws and regulations may also be applied in the implementations of the present disclosure.

In the related art, the manner in which a user views or posts a work posted by a friend is relatively monotonous.

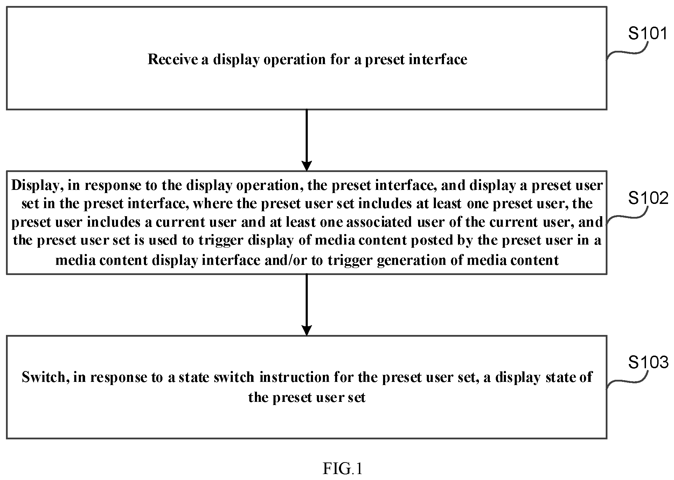

FIG. 1 is a schematic flowchart of an interface display method according to an embodiment of the present disclosure. The method may be performed by an interface display apparatus, where the apparatus may be implemented in software and/or hardware, may be configured in an electronic device, and typically may be configured in a mobile phone or a tablet computer. The interface display method provided in the embodiment of the present disclosure is applicable to a scenario in which a preset user set is displayed in a preset interface in different display states. As shown in FIG. 1, the interface display method provided in the embodiment may include the following steps.

S101, a display operation for a preset interface is received.

The preset interface may be an interface for displaying a preset user set. The present embodiment does not limit what the preset interface is, as long as the corresponding technical effect may be implemented. Exemplarily, the preset interface may be an associated user interface, and the associated user interface may be an interface for displaying associated user information of a current user. The associated user information may be understood as user information of an associated user. The display operation may be a trigger operation used to instruct to display the preset interface, such as a trigger operation used to instruct to launch a current application and display the preset interface, or a trigger operation used to switch the current interface from other interfaces other than the preset interface to the preset interface.

In the present embodiment, when the current user wants to view the preset interface or the preset user set, the current user may perform the display operation for the preset interface. Correspondingly, the current application may receive the display operation performed by the current user.

S102, in response to the display operation, the preset interface is displayed, and a preset user set displayed in the preset interface, where the preset user set includes at least one preset user, the preset user includes a current user and at least one associated user of the current user, and the preset user set is used to trigger display of media content posted by the preset user in a media content display interface and/or to trigger generation of media content.

The preset user set may be understood as a set of preset users. The preset user set may be a set that supports the current user to trigger to view the media content posted by the preset user in the media content display interface, and/or a set that supports the current user to trigger to generate the media content.

The preset user set includes one or more preset users. The preset user may include the current user and/or at least one associated user of the current user. The current user may be a user who performs the display operation for the preset interface. The associated user of the current user may be a user who has a preset association relationship with the current user. The preset association relationship may be, for example, an attention relationship, which is not limited in the present embodiment.

Specifically, in the case where the display operation for the preset interface is received from the current user, the preset interface may be displayed in response to the display operation, and the preset user set 20 may be displayed in the preset interface. For example, user identifications 21 of one or more preset users included in the preset user set 20 may be displayed in the preset interface.

When displaying the user identification of the preset user included in the preset user set, for example, it is possible to display the user identification of the current user and/or the user identification of at least one associated user of the current user. The display sequence of the user identification of each preset user in the preset user set is not limited. Exemplarily, it is possible to first display the user identification of each preset user according to an order of current user-associated user with preset media content that the current user has not viewed-associated user with only preset media content that the current user has viewed-associated user without preset media content, and for a sorting dimension with a plurality of associated users in the above four sorting dimensions, the associated users in the sorting dimension may be sorted according to whether the associated users are online (in the case where the users authorize to display the online state), etc. The preset media content may be any media content, or may be media content of a preset type or media content generated in a preset generation manner, which is not limited to the present embodiment.

In the present embodiment, the display manner of the preset user set in the preset interface may be set according to needs. For example, when the preset user set is displayed in the preset interface, the media content posted by the preset user in the preset user set may or may not be displayed in the preset interface.

In some implementations, when the preset user set is displayed in the preset interface, the media content posted by the preset user in the preset user set may be displayed in the preset interface, for example, the preset user set and the media content posted by the preset user in the preset user set may be displayed in different areas of the preset interface. In this case, optionally, the displaying a preset user set in the preset interface includes: displaying the preset user set in a first area of the preset interface, and displaying fourth media content posted by a seventh user among the at least one preset user in a third area of the preset interface.

The first area is an area in the preset interface for displaying the preset user set, that is, a display area of the preset user set. The third area is an area in the preset interface for displaying the media content posted by the preset user, that is, a display area of the media content posted by the preset user. The first area and the third area may be different areas of the preset interface, and the relative positional relationship between the first area and the third area in the preset interface is not limited. Exemplarily, the first area may be located above or below the third area, for example, the first area may be a top area or a bottom area of the preset interface. The following uses an example in which the first area is the top area of the preset interface for illustration.

The fourth media content may be understood as the media content currently displayed in the preset interface. The seventh user is the poster of the fourth media content, that is, the user who posts the fourth media content. The seventh user may be a preset user in the preset user set.

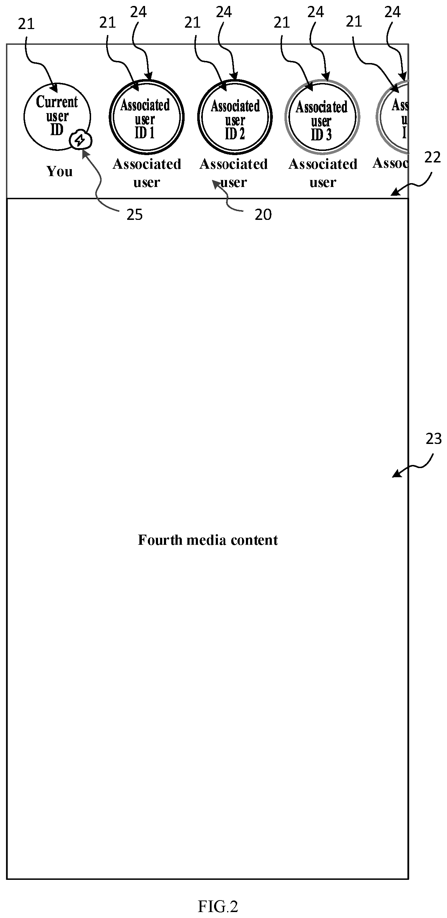

Exemplarily, as shown in FIG. 2, when the preset interface is displayed in response to the display operation for the preset interface, the preset user set 20 may be displayed in the first area 22 of the preset interface, and the fourth media content posted by the seventh user in the preset user set may be displayed in the third area 23 of the preset interface, so as to further enrich the display content of the preset interface and meet different needs of the users.

S103, in response to a state switch instruction for the preset user set, a display state of the preset user set is switched.

The state switch instruction may be an instruction used to instruct to switch the display state of the preset user set. The state switch instruction may include a state switch operation of the current user, and/or may be automatically generated by the current application (such as a client) or a server when a set condition is satisfied. The state switch operation may be a trigger operation used to instruct to switch the display state of the preset user set, and the execution manner of the state switch operation is not limited. The set condition may be a preset condition for switching the display state of the preset user set, which may be flexibly set according to needs. For example, the set condition may include: displaying the preset user set in the first state for greater than or equal to a preset time length and no trigger operation for the preset user set is received within the preset time length, and/or, displaying the preset user set in the second state and a certain preset user in the preset user set newly posts media content, etc.

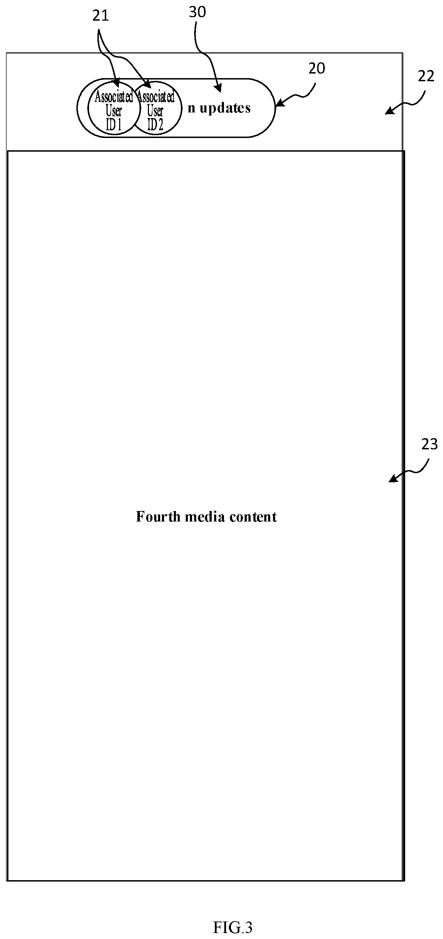

Specifically, in the case where the state switch instruction for the preset user set is received, the display state of the preset user set 20 may be switched in response to the state switch instruction, for example, the preset user set 20 is switched from the first state (as shown in FIG. 2) to the second state (as shown in FIG. 3), or the preset user set 20 is switched from the second state (as shown in FIG. 3) to the first state (as shown in FIG. 2).

In the present embodiment, the preset user set may have different display states, for example, the preset user set may have a first state and a second state. In different states (for example, in the first state and the second state), the preset user set may have different display styles. The display style may include, for example, the size of the display area in which the preset user set is located, the number and/or type of the user identifications displayed in the preset user set, the arrangement of the user identifications displayed in the preset user set, and/or the prompting manner for the preset user in the preset state in the preset user set, etc.

Optionally, the display state of the preset user set includes a first state and a second state, and the interface display method provided in the embodiment further includes: in the first state, displaying a user identification of at least one preset user in the preset user set; and/or, in the second state, displaying a user identification of at least one preset user in a preset state and/or a media content generation control in the preset user set.

Exemplarily, as shown in FIG. 2, when the preset user set 20 is displayed in the first state, the user identification 21 of the at least one preset user may be displayed in the preset user set 20, and the user identification 21 of the at least one preset user may include the user identification 21 of the preset user in the preset state (such as associated user identification 1, associated user identification 2, associated user identification 3, and associated user identification 4 in FIG. 2, where associated user identification 4 is not fully displayed) and/or the user identification 21 of the preset user not in the preset state (such as the current user identification in FIG. 2). In the case where the preset user set includes the preset user in the preset state and the preset user not in the preset state, the preset user set in the first state may be used to display the user identification 21 of the preset user in the preset state and the user identification 21 of the preset user not in the preset state.

As shown in FIG. 3, when the preset user set 20 is displayed in the second state, the user identification 21 of the at least one preset user in the preset state may be displayed in the preset user set 20, and the at least one preset user in the preset state may be, for example, a preset user with preset media content that the current user has not viewed. In this case, the preset user set 20 may only be used to display the user identification 21 of at least a portion of the preset user in the preset state, and not to display the user identification 21 of the preset user not in the preset state.

The user identification of the preset user may include, for example, an avatar and/or a nickname of the preset user, which is not limited in the present embodiment. The manner of determining whether the preset user is in the preset state is not limited. In some implementations, it is possible to determine whether the preset user is in the preset state based on whether the preset user has preset media content. For example, a preset user with preset media content may be determined as being in the preset state, and a preset user without preset media content may be determined as not being in the preset state. The preset media may include, for example, media content that the current user has not viewed and/or media content that the current user has viewed. In this case, optionally, the preset user in the preset state includes a preset user with preset media content, and the preset media content includes media content that the current user has not viewed.

In the present embodiment, when the preset user set is displayed, the preset user in the preset state in the preset user set may be indicated by the indication information. Optionally, in the first state, the preset user in the preset state in the preset user set is indicated by first indication information; and/or, in the second state, the preset user in the preset state in the preset user set is indicated by second indication information.

The first indication information and the second indication information may be indication information used to indicate the preset user in the preset state, and the first indication information and the second indication information may be the same or different indication information. Exemplarily, the first indication information and the second indication information may be different indication information, and the specific information type and/or information content of the first indication information and the second indication information are not limited, as long as they are different.

Optionally, the first indication information includes a preset identification displayed in association with the user identification, and/or the second indication information includes character information. Exemplarily, when the preset user set is in the first state, the preset user in the preset state in the preset user set may be indicated by the preset identification, for example, the preset user in the preset state in the preset user set may be indicated by displaying the preset identification in an associated position of the user identification of the preset user in the preset state; and/or, when the preset user set is in the second state, the user identification displayed in the preset user set is indicated by the preset character information to be the user identification of the preset user in the preset state, and/or the total number of the preset media content posted by the preset user in the preset state or the total number of the preset media content that the current user has not viewed and that is posted by the preset user in the preset state.

The preset identification and the character information may be set according to needs, which is not limited in the present embodiment. Exemplarily, as shown in FIG. 2, the preset identification may be a ring 24, and the ring 24 may be displayed around the user identification 21 of the preset user in the preset state, for example, the avatar of the corresponding preset user in the preset state may be displayed in the ring 24. As shown in FIG. 3, the character information may be prompt information 30 for the total number of the preset media content that the current user has not viewed, so that the total number of the preset media content that is posted by the preset user in the preset user set and that the current user has not viewed (n as shown in FIG. 3, where n is a positive integer) may be prompted by the prompt information 30.

In addition, for the preset user in the preset state, the preset identification of the preset user with media content that the current user has not viewed may be the same or different from the preset identification of the preset user without media content that the current user has not viewed. Optionally, the preset user with the preset media content that the current user has not viewed and the preset user without the preset media content that the current user has not viewed may be indicated by different preset identifications to be in the preset state. Taking the preset identification being a ring as an example, the user identification of the preset user with the preset media content that the current user has not viewed may be indicated by a ring of a first color, as shown in FIG. 2 (in FIG. 2, the first color is black and the second color is gray as an example) associated user identification 1 and associated user identification 2, and/or the user identification of the preset user without the preset media content that the current user has not viewed may be indicated by a ring of a second color, as shown in FIG. 2 associated user identification 3 and associated user identification 4. The first color and the second color are not limited, and may be specifically set according to needs.

In some embodiments, when the preset user set is in the first state and the second state, the user identifications of the preset users in the preset user set may be displayed in the same or different arrangements. Optionally, in the first state and in the second state, the user identifications in the preset user set have different arrangements, and the arrangements include flat arrangement and/or overlapping arrangement. For example, when the preset user set is in the first state, the user identification of the at least one preset user in the preset user set may be displayed in the flat arrangement, as shown in FIG. 2; and when the preset user set is in the second state, the user identification of the at least one preset user (such as the at least one preset user in the preset state) in the preset user set may be displayed in the overlapping arrangement, as shown in FIG. 3. When displayed in the flat arrangement, there may be no overlapping area between different user identifications; and when displayed in the overlapping arrangement, there may be an overlapping area between adjacent user identifications.

In some embodiments, when the preset user set is in the first state and the second state, the number of the displayed user identifications of the preset users may be the same or different. Optionally, in the first state and in the second state, different numbers of user identifications are displayed in the preset user set. For example, the maximum number of user identifications displayed when the preset user set is in the first state may be greater than the maximum number of user identifications displayed when the preset user set is in the second state, as shown in FIG. 2 and FIG. 3.

In some embodiments, when the preset user set is in the first state and the second state, the display area (such as the first area) in which the preset user set is located may have the same or different display sizes. Optionally, the preset user set is correspondingly displayed in a first area of the preset interface, the first area has a first area size when the preset user set is in the first state, and the first area has a second area size when the preset user set is in the second state, where the first area size is greater than the second area size. In other words, the area size of the first area when the preset user set is in the first state may be greater than the area size of the first area when the preset user set is in the second state, as shown in FIG. 2 and FIG. 3. The first area size may be understood as the area size of the first area when the preset user set is in the first state, and the second area size may be understood as the area size of the first area when the preset user set is in the second state.

In some embodiments, the display state of the preset user set may be switched based on the received state switch operation, and the state switch operation may include a first state switch operation and a second state switch operation. In this case, optionally, the switching the display state of the preset user set in response to the state switch instruction for the preset user set includes: switching the preset user set from the first state to the second state in response to the first state switch operation for the preset user set; and/or switching the preset user set from the second state to the first state in response to the second state switch operation for the preset user set.

The first state switch operation may be a trigger operation used to instruct to switch the preset user set from the first state to the second state. The execution manner of the first state switch operation is not limited, as long as the effect of switching the preset user set from the first state to the second state may be implemented. The second state switch operation may be a trigger operation used to instruct to switch the preset user set from the second state to the first state. The execution manner of the second state switch operation is not limited, as long as the effect of switching the preset user set from the second state to the first state may be implemented.

Optionally, the first state switch operation includes a first slide operation acting on the first area and/or a second slide operation acting on the preset interface; and/or the second state switch operation includes a third slide operation acting on the first area, or a click operation on the preset user set.

The first slide operation and the third slide operation may be different slide operations acting on the first area. For example, the first slide operation and the third slide operation may have different trigger positions and/or different sliding directions. Taking the first slide operation and the third slide operation having different sliding directions as an example, the first slide operation may be an upward slide operation, and the third slide operation may be a downward slide operation; or the first slide operation may be a downward slide operation, and the third slide operation may be an upward slide operation, etc. The first slide operation and the second slide operation may be different slide operations. Exemplarily, the first slide operation may be an up-slide operation or a down-slide operation starting from the first area; the second slide operation may be an up-slide operation or a down-slide operation acting on the preset interface, such as an up-slide operation or a down-slide operation starting from outside the first area, etc. The click operation on the preset user set may be, for example, an operation of clicking the displayed preset user set.

Exemplarily, in the case where the first state switch operation for the preset user set is received, for example, when it is detected that the current user performs the first slide operation or the second slide operation, the preset user set may be switched from the first state to the second state; and/or in the case where the second state switch operation for the preset user set is received, for example, when it is detected that the current user performs the third slide operation or clicks on the preset user set in the second state, the preset user set may be switched from the second state to the first state.

The interface display method provided in the present embodiment includes: receiving a display operation for a preset interface; in response to the display operation, displaying the preset interface, and displaying a preset user set in the preset interface, where the preset user set includes at least one preset user, the preset user includes a current user and at least one associated user of the current user, and the preset user set is used to trigger display of media content posted by the preset user in a media content display interface and/or to trigger generation of media content; and in response to a state switch instruction for the preset user set, switching a display state of the preset user set. According to the technical solution described above, the present embodiment displays, in the preset interface, the preset user set that supports triggering to view the media content posted by the preset user and/or triggering to generate the media content, and supports switching the display state of the preset user set, which may enrich the display manner of the media content posted by the preset user and/or the generation manner of the media content, and may enrich the display manner of the preset media content set, so as to meet different needs of the users.

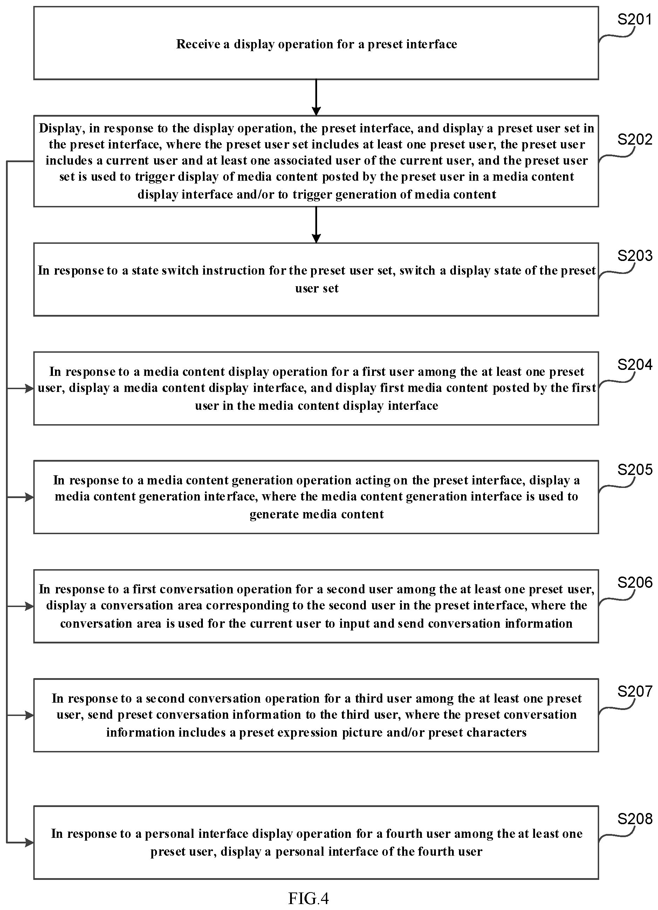

FIG. 4 is a schematic flowchart of another interface display method according to an embodiment of the present disclosure. The solution in the present embodiment may be combined with one or more optional solutions in the above embodiment. Optionally, after the displaying the preset user set in the preset interface, the method further includes at least one of the following: in response to a media content display operation for a first user among the at least one preset user, displaying a media content display interface, and displaying first media content posted by the first user in the media content display interface; in response to a media content generation operation acting on the preset interface, displaying a media content generation interface, where the media content generation interface is used to generate media content; in response to a first conversation operation for a second user among the at least one preset user, displaying a conversation area corresponding to the second user in the preset interface, where the conversation area is used for the current user to input and send conversation information; in response to a second conversation operation for a third user among the at least one preset user, sending preset conversation information to the third user, where the preset conversation information includes a preset expression picture and/or preset characters; or in response to a personal interface display operation for a fourth user among the at least one preset user, displaying a personal interface of the fourth user.

Correspondingly, as shown in FIG. 4, the interface display method provided in the present embodiment may include the following steps.

S201, a display operation for a preset interface is received.

S202, in response to the display operation, the preset interface is displayed, and a preset user set is displayed in the preset interface, and performing at least one of S203-S208, where the preset user set includes at least one preset user, the preset user includes a current user and at least one associated user of the current user, and the preset user set is used to trigger display of media content posted by the preset user in a media content display interface and/or to trigger generation of media content.

S203, in response to a state switch instruction for the preset user set, a display state of the preset user set is switched.

S204, in response to a media content display operation for a first user among the at least one preset user, a media content display interface is displayed, and first media content posted by the first user is displayed in the media content display interface.

The media content display operation may be a trigger operation used to instruct to display the media content posted by a certain preset user, such as an operation of clicking on a preset user identification in the preset state or other trigger operations that may achieve the same effect. The first user may be a preset user corresponding to the media content display operation, such as a preset user corresponding to the user identification that the media content display operation acts on. The first media content may be media content posted by the first user. Optionally, when the first user has media content that the current user has not viewed, the first media content may be the media content that is posted by the first user and that the current user has not viewed.

In the present embodiment, it is possible to support the user to quickly view the media content posted by the preset user in the preset user set by the displayed preset user set, to enrich the viewing manner of the media content posted by the preset user and simplify the operations required for viewing the media content posted by the preset user.

Specifically, in the case where the media content display operation for a certain preset user in the preset user set is received, for example, when it is detected that the current user clicks on the user identification of the certain preset user displayed in the preset user set, the current interface may be switched from the preset interface to the media content display interface, and the media content posted by the preset user may be displayed in the media content display interface, such as displaying the preset media content or non-preset media content posted by the preset user.

In some implementations, after the displaying the first media content posted by the first user in the media content display interface, the method further includes at least one of the following: in response to a first media content switch operation acting on the media content display interface, switching the media content displayed in the media content display interface to second media content posted by the first user; or in response to a second media content switch operation acting on the media content display interface, switching the media content displayed in the media content display interface to third media content posted by a fifth user, where the fifth user is included in the at least one preset user.

The first media content switch operation may be a trigger operation used to instruct to switch the media content displayed in the media content display interface to another piece of media content posted by the same preset user. The second media content switch operation may be a trigger operation used to instruct to switch the media content displayed in the media content display interface to media content posted by another preset user. The first media content switch operation and the second media content operation are different media content switch operations, and the execution manners of the two operations are not limited. Optionally, the first media content switch operation includes a first slide operation in a first direction, and/or the second media content switch operation includes a second slide operation in a second direction. The first direction and the second direction may be different directions. Exemplarily, the first direction may be a horizontal direction, and the second direction may be a vertical direction; or the first direction may be a vertical direction, and the second direction may be a horizontal direction, etc.

The second media content and the media content currently displayed in the media content display interface are media content posted by the same preset user, for example, the second media content may be media content posted by the first user and different from the first media content. The third media content and the media content currently displayed in the media content display interface are media content posted by different preset users, for example, the third media content may be media content posted by a fifth user different from the first user. Whether the first media content, the second media content, and/or the third media content are preset media content is not limited. For example, the first media content, the second media content, and the third media content may all be non-preset media content or at least partially be preset media content. Optionally, the first media content, the second media content, and the third media content are all preset media content, so as to facilitate the user to quickly view the preset media content posted by the same or different preset users.

In the above implementation, it is possible to support switching to view different media content posted by the same preset user and/or media content posted by different preset users in the media content display interface, to further simplify the operations required for viewing the different media content posted by the preset user and meet different viewing needs of the users.

Taking the first media content posted by the first user currently displayed in the media content display interface as an example, in the case where the first media content switch operation acting on the media content display interface is received, for example, when it is detected that the current user slides horizontally in the media content display interface, the media content currently displayed in the media content display interface may be switched from the first media content to the second media content posted by the first user; and/or in the case where the second media content switch operation acting on the media content display interface is received, for example, when it is detected that the current user slides vertically in the media content display interface, the media content currently displayed in the media content display interface may be switched from the media content posted by the first user (such as the first media content or the second media content) to the third media content posted by the fifth user.

S205, in response to a media content generation operation acting on the preset interface, a media content generation interface is displayed, where the media content generation interface is used to generate media content.

The media content generation interface may be understood as an interface for generating media content. Exemplarily, the media content generation interface may include a shooting interface and/or a material interface. The material interface may be an interface for displaying media content materials for the current user to select. With full authorization from the current user, the material interface may be, for example, an album of the current user.

The media content generation operation may be a trigger operation used to instruct to display of the media content generation interface. The execution manner of the media content generation operation is not limited, as long as it may instruct to display of the media content generation interface.

Optionally, the media content generation operation includes at least one of a first generation operation, a second generation operation, and a third generation operation, where the first generation operation acts on a user identification of the current user, the second generation operation acts on a media content generation control displayed in the preset user set, the third generation operation acts on a second area of the preset interface, and the third generation operation is a slide operation.

The first generation operation may be a trigger operation for triggering the user identification of the current user, such as an operation of clicking on the user identification of the current user when the current user is not in the preset state. The second generation operation may be an operation of triggering the media content generation control displayed in the preset user set. The media content generation control may be a control used to trigger to display the media content generation interface, and the display position of the media content generation control is not limited. Exemplarily, the media content generation control may be displayed in an associated position of the user identification of the current user. The third generation operation may be a slide operation acting on the second area of the preset interface, such as a slide operation starting from the second area of the preset interface. The sliding direction of the slide operation may be, for example, upward, downward, leftward, or rightward, which is not limited in the present embodiment. The position of the second area in the preset interface may be set according to needs. Exemplarily, the second area may or may not have an overlapping area with the first area and/or the third area. When the second area has an overlapping area with the first area and/or the third area, the third generation operation and the slide operation used to implement other functions in the first area and/or the third area may correspond to different sliding directions, different sliding distances, different sliding trajectories, and/or different sliding durations, which may be specifically set according to needs.

Exemplarily, in the case where the media content generation operation acting on the preset interface is received, for example, when it is detected that the current user triggers the user identification of the current user, when it is detected that the current user triggers the media content generation control displayed in the preset user set, or when it is detected that the current user slides down in the second area of the preset interface, the media content generation interface may be displayed for the current user to create new media content. It may be understood that the media content generation interface may include a shooting interface, an uploading interface, or the like.

S206, in response to a first conversation operation for a second user among the at least one preset user, a conversation area corresponding to the second user in the preset interface is displayed, where the conversation area is used for the current user to input and send conversation information.

The first conversation operation may be a trigger operation used to instruct to display a conversation area between the current user and a certain preset user in the preset interface. The execution manner of the first conversation operation is not limited, as long as the corresponding effect may be implemented. Exemplarily, the first conversation operation may include a long-press operation acting on a certain user identification displayed in the preset user set, or a trigger operation acting on a first conversation control corresponding to a certain preset user. The display position of the first conversation control is not limited. Exemplarily, the first conversation control may be displayed in an associated position of a user identification of a preset user, for example, in a control panel of the preset user. The second user may be a preset user corresponding to the first conversation operation, in other words, a preset user whose corresponding conversation area is instructed to be displayed by the first conversation operation. The conversation area may be an area for the current user to input and send the conversation information.

In the present embodiment, it is possible to support the current user to have a conversation with the associated user in the preset user set through the preset user set, which simplifies the operations required for the current user to have a conversation with the associated user.

Specifically, in the case where the first conversation operation for a certain preset user is received, for example, when it is detected that the current user performs a long press on the user identification of the certain preset user displayed in the preset conversation set, or when it is detected that the current user triggers the first conversation control corresponding to the certain preset user, the conversation area between the current user and the preset user may be displayed in the preset interface, for example, a conversation window or a conversation panel between the current user and the preset user may be displayed in the preset interface, for the current user to input in the conversation area and send the conversation information to the preset user. It may be understood that historical conversation information between the current user and the preset user may also be displayed in the conversation area for the current user to view.

In some implementations, after displaying the conversation area corresponding to the second user in the preset interface, the method further includes: in response to a conversation area switch operation, switching a current conversation area to a conversation area corresponding to a sixth user.

The conversation area switch operation may be a trigger operation used to instruct to switch the conversation area currently displayed in the preset interface, such as a horizontal slide operation acting on the conversation area, or a trigger operation for a conversation area switch control. The execution manner of the conversation area switch operation is not limited in the present embodiment. Different conversation areas may correspond to different associated users. The current conversation area may be the conversation area currently displayed in the preset interface. The sixth user may be a preset user corresponding to the switched conversation area, in other words, an associated user corresponding to the conversation area instructed to be switched to by the conversation area switch operation.

In the present embodiment, after the conversation area is displayed in the preset interface, it is also possible to support the current user to switch the currently displayed conversation area, so as to facilitate the current user to have a conversation with different preset users.

Exemplarily, in the case where the conversation area switch operation of the current user is received, the current conversation area may be switched. For example, when it is detected that the current user slides horizontally in the current conversation area, the current conversation area may be switched to a conversation area between the current user and a next associated user in the preset user set or a conversation area between the current user and a previous associated user in the preset user set according to the order of each associated user in the preset user set.

S207, in response to a second conversation operation for a third user among the at least one preset user, preset conversation information is sent to the third user, where the preset conversation information includes a preset expression picture and/or preset characters.

The second conversation operation may be a trigger operation used to instruct to send the preset conversation information, such as an operation of triggering a second conversation control. The display position of the second conversation control is not limited. Exemplarily, the second conversation control may be displayed in an associated position of a user identification of a preset user, for example, in a control panel of the preset user. The preset conversation information may be conversation information including preset information content, and the preset information content may include, for example, a preset expression picture and/or preset characters. The preset expression picture and the preset characters may be set according to needs, which is not limited in the present embodiment. The third user may be a preset user corresponding to the second conversation operation, that is, a preset user to whom the preset conversation information is sent in response to the second conversation operation.

In the present embodiment, the preset user set may support the user to send the preset conversation information without the need for the user to input information content and/or display the conversation area, which simplifies the operations required for the user to send the conversation information.

Exemplarily, in the case where the second conversation operation for a certain preset user is received, for example, when it is detected that the current user triggers the second conversation control, the preset conversation information may be sent to the preset user, so as to have a conversation exchange with the preset user through the preset conversation information.

S208, in response to a personal interface display operation for a fourth user among the at least one preset user, a personal interface of the fourth user is displayed.

The personal interface display operation may be a trigger operation used to instruct to display a personal interface of a certain preset user. The execution manner of the personal interface display operation is not limited. Exemplarily, the personal interface display operation may include a trigger operation for triggering a personal interface display control of a certain preset user, and the personal interface display control may be displayed in an associated position of a user identification of the preset user in the personal user set, for example, in a control panel of the preset user. The fourth user may be understood as a preset user corresponding to the personal interface display operation, such as a preset user instructed to display the personal interface by the personal interface display operation.

In the present embodiment, the preset user set may support the current user to view the personal interface of the preset user, so as to further enrich the functions of the preset user set and simplify the operations required to view the personal interface of the preset user.

Specifically, in the case where the personal interface display operation for a certain preset user is received, for example, when it is detected that the current user triggers the personal interface display control of the certain preset user, the current interface may be switched from the preset interface to the personal interface of the preset user, so that the current user may view the interface content of the personal interface.

In the present embodiment, the execution manners of the first conversation operation, the second conversation operation, and the personal interface display operation may all be set according to needs. Optionally, at least one of the first conversation operation, the second conversation operation, and the personal interface display operation acts on a user identification of a corresponding user, or acts on a control panel of a corresponding preset user. For example, the first conversation operation, the second conversation operation, and/or the personal interface display operation may act on the user identification of the preset user, or act on the control panel of the preset user. When multiple operations among the first conversation operation, the second conversation operation, and the personal interface display operation act on the user identification of the preset user, the multiple operations may be different trigger operations for the user identification of the preset user. When multiple operations among the first conversation operation, the second conversation operation, and the personal interface display operation act on the control panel of the preset user, exemplarily, the multiple operations may act on different interactive controls in the control panel. The control panel of a certain preset user may be used to display interactive controls associated with the preset user, and the control panel may be displayed in an associated position of the user identification of the preset user, for example, the control panel may be displayed in the associated position of the user identification when the user identification of the preset user is displayed, or the control panel may be displayed in the associated position of the user identification in response to a panel display operation of the current user for the preset user, which is not limited in the present embodiment.

In some implementations, after the displaying the preset user set in the preset interface, the method further includes: in response to a panel display operation for the user identification of the preset user, displaying a control panel of a preset user corresponding to the panel display operation, and displaying at least one interactive control in the control panel, where the at least one interactive control includes at least one of a first conversation control, a second conversation control, and a personal interface display control, the first conversation control is used to trigger to perform the first conversation operation for a corresponding preset user, the second conversation control is used to trigger to perform the second conversation operation for a corresponding preset user, and the personal interface display control is used to trigger to perform the personal interface display operation for a corresponding preset user.

In the above implementations, the first conversation operation, the second conversation operation, and/or the personal interface display operation may act on the control panel of the preset user, and the control panel may be displayed in response to the panel display operation of the current user. The panel display operation may be a trigger operation used to instruct to display the control panel of a certain preset user, and the panel display operation may act on the user identification of the preset user, such as a long press operation acting on the user identification of the preset user.

Exemplarily, in the case where the panel display operation of the current user for a certain preset user is received, for example, when it is detected that the current user performs a long press on the user identification of the certain preset user displayed in the preset user set, the control panel of the preset user may be displayed in the associated position of the user identification, and the first conversation control, the second conversation control, and/or the personal interface display control may be displayed in the control panel. Thus, the current user may perform the first conversation operation for the preset user by triggering the first conversation control, perform the second conversation operation for the preset user by triggering the second conversation control, and/or perform the personal interface display operation for the preset user by triggering the personal interface display control.

In an optional implementation, the preset user set may perform the following interaction process based on the trigger operation of the current user:
As shown in FIG. 2, when the preset user set is in the expanded state (that is, the first state), the preset user with the preset media content may be indicated by the ring (that is, the preset identification). At this time, the user identification of the preset user who posts the preset media content that the current user has not viewed may carry the ring of the first color (such as associated user identification 1 and associated user identification 2 shown in FIG. 2), the user identification of the preset user who posts the preset media content but does not have the preset media content that the current user has not viewed may carry the ring of the second color (such as associated user identification 3 and associated user identification 4 shown in FIG. 2), and the user identification of the preset user who does not post the preset media content may not carry the ring (such as the current user identification shown in FIG. 2).

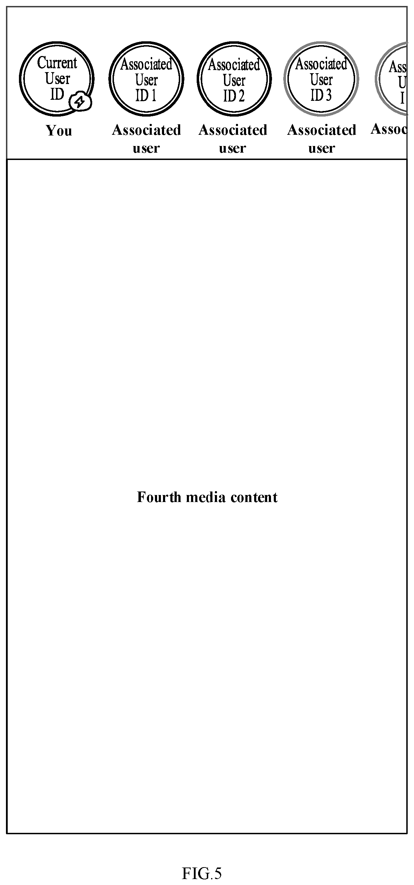

In this way, when it is detected that the current user clicks on his/her own user identification 21, clicks on the media content generation control 25, or slides down in the second area, the current interface may be switched from the preset interface to the media content generation interface for the current user to create and post the preset media content. After the current user posts the preset media content, the user identification 21 of the current user may carry the ring 24 of the first color, as shown in FIG. 5.

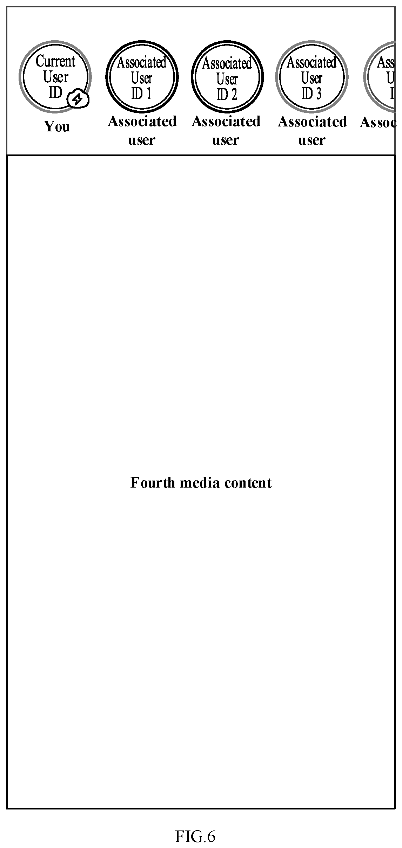

In the case where it is detected that the current user clicks on the user identification of the preset user carrying the ring, the current interface may be switched from the preset interface to the media content display interface. For example, when it is detected that the current user clicks on his/her own user identification, the current interface may be switched from the preset interface to the media content display interface, and the preset media content posted by the current user may be displayed in the media content display interface, such as the preset media content that the current user has not viewed. When returning to the preset interface based on the return operation of the current user, if the current user no longer has the preset media content that the current user has not viewed, the color of the ring carried by the user identification of the current user in the preset user set may be switched from the first color to the second color, as shown in FIG. 6.

In the case where it is detected that the current user clicks on the user identification of the preset user (such as an associated user) who does not carry the ring, the conversation area between the current user and the preset user may be displayed in the preset interface for the current user to input and send the conversation information to the preset user.

In the case where it is detected that the current user performs a long press on the user identification of the preset user (such as an associated user) carrying the ring, the conversation area between the current user and the preset user may be displayed in the preset interface for the current user to input and send the conversation information to the preset user; or the control panel of the preset user may be displayed, and the first conversation control, the second conversation control, and/or the personal interface display control may be displayed in the control panel. In the case where it is detected that the current user triggers the first conversation control, the conversation area between the current user and the preset user may be displayed in the preset interface for the current user to input and send the conversation information to the preset user; in the case where it is detected that the current user triggers the second conversation control, the preset conversation information may be sent to the preset user; and/or in the case where it is detected that the current user triggers the personal interface display control, the current interface may be switched from the preset interface to the personal interface of the preset user.

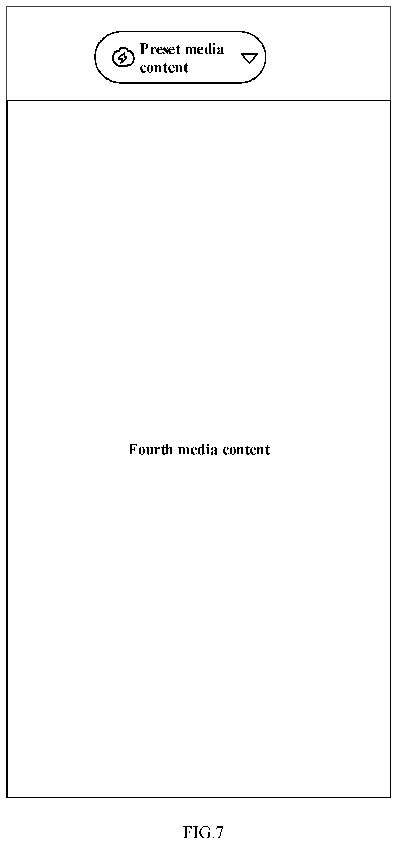

As shown in FIG. 3, when the preset user set is in the collapsed state (that is, the second state), the user identification of at least part of the preset user who has the preset media content that the current user has not viewed may be displayed in the preset user set, and the preset media content that the current user has not viewed may be indicated through the character information. In addition, when there is no preset media content that the current user has not viewed, the media content generation control may be displayed in the preset user set, as shown in FIG. 7. In this way, when it is detected that the current user slides down in the second area or clicks on the media content generation control, the current interface may be switched from the preset interface to the media content generation interface for the current user to create and post the preset media content.

In addition, in the case where the preset user set is in the expanded state, when it is detected that the current user slides up in the first area, the preset user set may be switched from the expanded state to the collapsed state. In the case where the preset user set is in the collapsed state, when it is detected that the current user clicks on the preset user set (for the case where the media content generation control is not displayed in the preset user set) or clicks on a position other than the media content generation control in the preset user set (for the case where the media content generation control is displayed in the preset user set), the preset user set may be switched from the collapsed state to the expanded state.

The interface display method provided by the present embodiment supports the current user to view the preset media content posted by the preset user, create the media content, have a conversation with the preset user, and/or view the personal interface of the preset user based on the preset user set, which may further enrich the viewing manner of the preset media content, the creation manner of the media content, the conversation manner with the preset user, and/or the viewing manner of the personal homepage of the preset user, and simplify the operations that the user needs to perform in the above interactions.

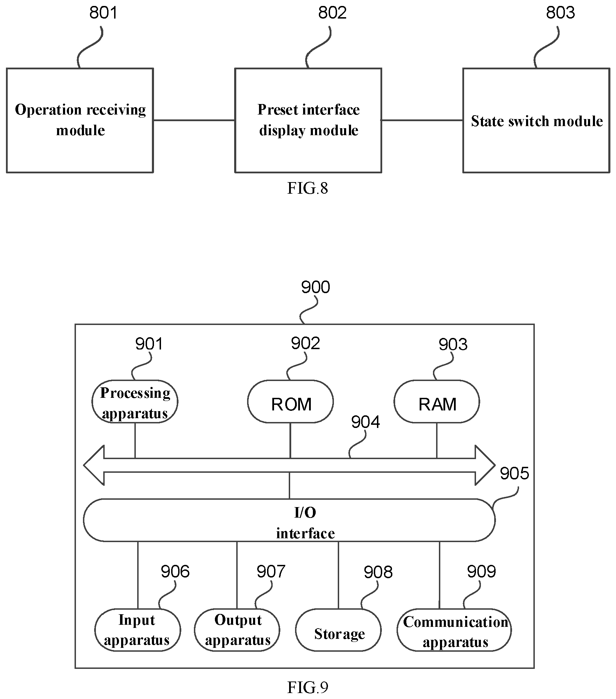

FIG. 8 is a block diagram of an interface display apparatus according to an embodiment of the present disclosure. The apparatus may be implemented in software and/or hardware, may be configured in an electronic device, and typically may be configured in a mobile phone or a tablet computer. The apparatus may perform an interface display method to display a preset user set in a preset interface in different display states. As shown in FIG. 8, the interface display apparatus provided in the embodiment may include an operation receiving module 801, a preset interface display module 802, and a state switch module 803.

The operation receiving module 801 is configured to receive a display operation for a preset interface.

The preset interface display module 802 is configured to, in response to the display operation, display the preset interface, and display the preset user set in the preset interface, where the preset user set includes at least one preset user, the preset user includes a current user and at least one associated user of the current user, and the preset user set is used to trigger display of media content posted by the preset user in a media content display interface and/or to trigger generation of media content.

The state switch module 803 is configured to, in response to a state switch instruction for the preset user set, switch a display state of the preset user set.

The interface display apparatus provided in the present embodiment receives the display operation for the preset interface through the operation receiving module; in response to the display operation, displays the preset interface through the preset interface display module, and displays the preset user set in the preset interface, where the preset user set includes at least one preset user, the preset user includes the current user and at least one associated user of the current user, and the preset user set is used to trigger display of the media content posted by the preset user in the media content display interface and/or to trigger generation of the media content; and switches the display state of the preset user set through the state switch module in response to the state switch instruction for the preset user set. According to the technical solution described above, the present embodiment displays, in the preset interface, the preset user set that supports triggering to view the media content posted by the preset user and/or triggering to generate the media content, and supports switching the display state of the preset user set, which may enrich the display manner of the media content posted by the preset user and/or the generation manner of the media content, and may enrich the display manner of a preset media content set, so as to meet different needs of users.

Optionally, the state switch module 803 includes a first state switch unit and/or a second state switch unit. The first state switch unit is configured to, in response to a first state switch operation for the preset user set, switch the preset user set from a first state to a second state; the second state switch unit is configured to, in response to a second state switch operation for the preset user set, switch the preset user set from the second state to the first state.

Optionally, the preset user set is correspondingly displayed in a first area of the preset interface, the first area has a first area size when the preset user set is in the first state, the first area has a second area size when the preset user set is in the second state, and the first area size is greater than the second area size.

Optionally, the first state switch operation includes a first slide operation acting on the first area and/or a second slide operation acting on the preset interface; and/or the second state switch operation includes a third slide operation acting on the first area, or a click operation on the preset user set.

Optionally, the display state of the preset user set includes the first state and the second state, and the interface display apparatus provided in the embodiment may further include: in the first state, a user identification of at least one preset user is displayed in the preset user set; and/or in the second state, a user identification of at least one preset user in a preset state and/or a media content generation control are displayed in the preset user set.

Optionally, in the first state, the preset user in the preset state in the preset user set is indicated by first indication information; and/or in the second state, the preset user in the preset state in the preset user set is indicated by second indication information.

Optionally, the first indication information includes a preset identification displayed in association with the user identification, and/or the second indication information includes character information.

Optionally, the preset user in the preset state includes a preset user with preset media content, and the preset media content includes media content that the current user has not viewed.

Optionally, in the first state and in the second state, user identifications in the preset user set have different arrangements, the arrangements including flat arrangement and/or overlapping arrangement; and/or in the first state and in the second state, different numbers of user identifications are displayed in the preset user set.

Further, the interface display apparatus provided in the present embodiment may further include at least one of the following modules: a media content display module, a media content generation module, a conversation area display module, a conversation information sending module, or a personal interface display module. The media content display module is configured to, after the displaying the preset user set in the preset interface, in response to a media content display operation for a first user among the at least one preset user, display a media content display interface, and display first media content posted by the first user in the media content display interface; the media content generation module is configured to, after the displaying the preset user set in the preset interface, in response to a media content generation operation acting on the preset interface, display a media content generation interface, where the media content generation interface is used to generate media content; the conversation area display module is configured to, after the displaying the preset user set in the preset interface, in response to a first conversation operation for a second user among the at least one preset user, display a conversation area corresponding to the second user in the preset interface, where the conversation area is used for the current user to input and send conversation information; the conversation information sending module is configured to, after the displaying the preset user set in the preset interface, in response to a second conversation operation for a third user among the at least one preset user, send preset conversation information to the third user, where the preset conversation information includes a preset expression picture and/or preset characters; and the personal interface display module is configured to, after the displaying the preset user set in the preset interface, in response to a personal interface display operation for a fourth user among the at least one preset user, display a personal interface of the fourth user.

Further, the interface display apparatus provided in the present embodiment may further include at least one of the following modules: a first switch module or a second switch module. The first switch module is configured to, after the displaying the first media content posted by the first user in the media content display interface, in response to a first media content switch operation acting on the media content display interface, switch the media content displayed in the media content display interface to second media content posted by the first user; and the second switch module is configured to, after the displaying the first media content posted by the first user in the media content display interface, in response to a second media content switch operation acting on the media content display interface, switch the media content displayed in the media content display interface to third media content posted by a fifth user, where the fifth user is included in the at least one preset user.

Optionally, the first media content switch operation includes a first slide operation in a first direction, and/or the second media content switch operation includes a second slide operation in a second direction.

Optionally, the first media content, the second media content, and the third media content are all preset media content.

Optionally, the media content generation operation includes at least one of a first generation operation, a second generation operation, or a third generation operation, where the first generation operation acts on a user identification of the current user, the second generation operation acts on a media content generation control displayed in the preset user set, the third generation operation acts in a second area of the preset interface, and the third generation operation is a slide operation.

Optionally, at least one of the first conversation operation, the second conversation operation, and the personal interface display operation acts on a user identification of a corresponding user, or acts on a control panel of a corresponding preset user.

Further, the interface display apparatus provided in the present embodiment may further include a panel display module. The panel display module is configured to, after the displaying the preset user set in the preset interface, in response to a panel display operation for the user identification of the preset user, display a control panel of a preset user corresponding to the panel display operation, and display at least one interactive control in the control panel, where the at least one interactive control includes at least one of a first conversation control, a second conversation control, and a personal interface display control, the first conversation control is used to trigger to perform the first conversation operation for a corresponding preset user, the second conversation control is used to trigger to perform the second conversation operation for a corresponding preset user, and the personal interface display control is used to trigger to perform the personal interface display operation for a corresponding preset user.

Further, the interface display apparatus provided in the present embodiment may further include a third switch module. The third switch module is configured to, after the displaying the conversation area corresponding to the second user in the preset interface, in response to a conversation area switch operation, switch a current conversation area to a conversation area corresponding to a sixth user.

Optionally, the preset interface display module 802 may be configured to display the preset user set in a first area of the preset interface, and display fourth media content posted by a seventh user among the at least one preset user in a third area of the preset interface.

The interface display apparatus provided in the embodiment of the present disclosure may perform the interface display method provided in any embodiment of the present disclosure, and has corresponding functional modules and beneficial effects for performing the interface display method. For technical details not described in detail in this embodiment, reference may be made to the interface display method provided in any embodiment of the present disclosure.

Reference is made to FIG. 9 below, which illustrates a schematic structural diagram of an electronic device (e.g., a terminal device) 900 suitable for implementing the embodiments of the present disclosure. The terminal device in the embodiments of the present disclosure may include, but is not limited to, a mobile terminal such as a mobile phone, a notebook computer, a digital broadcast receiver, a PDA (personal digital assistant), a tablet computer, a PMP (portable multimedia player), a vehicle-mounted terminal (e.g., a vehicle-mounted navigation terminal), etc., and a fixed terminal such as a digital TV, a desktop computer, etc. The electronic device shown in FIG. 9 is only an example, and should not impose any limitation on the function and scope of use of the embodiments of the present disclosure.

As shown in FIG. 9, the electronic device 900 may include a processing apparatus (e.g., a central processing unit, a graphics processing unit, etc.) 901, which may perform various appropriate actions and processes according to a program stored in a read-only memory (ROM) 902 or a program loaded from a storage apparatus 908 into a random access memory (RAM) 903. The RAM 903 further stores various programs and data required for operations of the electronic device 900. The processing apparatus 901, the ROM 902, and the RAM 903 are interconnected by means of a bus 904. An input/output (I/O) interface 905 is also connected to the bus 904.

Generally, the following apparatuses may be connected to the I/O interface 905: an input apparatus 906 including, for example, a touch screen, a touchpad, a keyboard, a mouse, a camera, a microphone, an accelerometer, a gyroscope, etc.; an output apparatus 907 including, for example, a liquid crystal display (LCD), a speaker, a vibrator, etc.; the storage apparatus 908 including, for example, a magnetic tape, a hard disk, etc.; and a communication apparatus 909. The communication apparatus 909 may allow the electronic device 900 to communicate wirelessly or wiredly with other devices to exchange data. Although FIG. 9 shows the electronic device 900 having various apparatuses, it should be understood that not all the apparatuses shown herein need to be implemented or provided. More or fewer apparatuses may be implemented or provided alternatively.

In particular, according to the embodiments of the present disclosure, the process described above with reference to the flowchart may be implemented as a computer software program. For example, the embodiments of the present disclosure include a computer program product, which includes a computer program carried on a non-transitory computer-readable medium, where the computer program contains program code for performing the method shown in the flowchart. In such an embodiment, the computer program may be downloaded and installed from a network via the communication apparatus 909, or installed from the storage apparatus 908, or installed from the ROM 902. When the computer program is executed by the processing apparatus 901, the aforementioned functions defined in the method of the embodiments of the present disclosure are executed.

It should be noted that the above computer-readable medium in the present disclosure may be a computer-readable signal medium, a computer-readable storage medium, or any combination thereof. The computer-readable storage medium may be, for example, but is not limited to, an electrical, magnetic, optical, electromagnetic, infrared, or semi-conductive system, apparatus, device, or any combination thereof. More specific examples of the computer-readable storage medium may include, but are not limited to, an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium that contains or stores a program, which may be used by or in combination with an instruction execution system, apparatus, or device. In the present disclosure, the computer-readable signal medium may include a data signal propagated on a baseband or as a part of a carrier, and computer-readable program code is carried therein. This propagated data signal may be in a plurality of forms, including, but not limited to, an electromagnetic signal, an optical signal, or any suitable combination thereof. The computer-readable signal medium may also be any computer-readable medium other than the computer-readable storage medium, and the computer-readable signal medium may send, propagate, or transmit a program used by or in combination with an instruction execution system, apparatus, or device. The program code contained on the computer-readable medium may be transmitted in any suitable medium, including, but not limited to, a wire, an optical cable, a radio frequency (RF), etc., or any suitable combination thereof.

In some implementations, clients and servers may communicate using any currently known or future developed network protocol, such as the hypertext transfer protocol (HTTP), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The above computer-readable medium may be included in the above electronic device, or may exist alone without being assembled into the electronic device.

The above computer-readable medium carries one or more programs, which, when executed by the electronic device, cause the electronic device to: receive a display operation for a preset interface; in response to the display operation, display the preset interface, and display a preset user set in the preset interface, where the preset user set includes at least one preset user, the preset user includes a current user and at least one associated user of the current user, and the preset user set is used to trigger display of media content posted by the preset user in a media content display interface and/or to trigger generation of media content; and in response to a state switch instruction for the preset user set, switch a display state of the preset user set.

The computer program code for performing the operations of the present disclosure may be written in one or more programming languages or a combination thereof, where the programming languages include, but are not limited to, an object-oriented programming language, such as Java, Smalltalk, and C++, and further include conventional procedural programming languages, such as "C" language or similar programming languages. The program code may be executed entirely on a user's computer, partly on the user's computer, as a stand-alone software package, partly on the user's computer and partly on a remote computer, or entirely on the remote computer or server. In the case of involving the remote computer, the remote computer may be connected to the user's computer through any kind of network, including a local area network (LAN) or a wide area network (WAN), or it may be connected to an external computer (for example, connected by using the Internet provided by an Internet service provider).

The flowcharts and block diagrams in the drawings illustrate the possibly implemented architectures, functions, and operations of the system, method, and computer program product according to various embodiments of the present disclosure. In this regard, each block in the flowchart or block diagram may represent a module, program segment, or part of code, which contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and the combination of the blocks in the block diagram and/or the flowchart, may be implemented by a dedicated hardware-based system that executes specified functions or operations, or may be implemented by a combination of dedicated hardware and computer instructions.

The involved units described in the embodiments of the present disclosure may be implemented in software or hardware. Among them, the name of a module does not constitute a limitation on the unit itself under certain circumstances.

The functions described hereinabove may be performed at least partly by one or more hardware logic components. For example, without limitation, exemplary types of the hardware logic components that may be used include: a field programmable gate array (FPGA), an application specific integrated circuit (ASIC), an application specific standard product (ASSP), a system on chip (SOC), a complex programmable logic device (CPLD), etc.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, device, or any suitable combination thereof. More specific examples of the machine-readable storage medium may include an electrical connection based on one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

According to one or more embodiments of the present disclosure, Example 1 provides an interface display method, including:
receiving a display operation for a preset interface;
in response to the display operation, displaying the preset interface, and displaying a preset user set in the preset interface, where the preset user set includes at least one preset user, the preset user includes a current user and at least one associated user of the current user, and the preset user set is used to trigger display of media content posted by the preset user in a media content display interface and/or to trigger generation of media content; and
in response to a state switch instruction for the preset user set, switching a display state of the preset user set.

According to one or more embodiments of the present disclosure, Example 2 is the method according to Example 1, where switching the display state of the preset user set in response to the state switch instruction for the preset user set includes:
in response to a first state switch operation for the preset user set, switching the preset user set from a first state to a second state; and/or
in response to a second state switch operation for the preset user set, switching the preset user set from the second state to the first state.

According to one or more embodiments of the present disclosure, Example 3 is the method according to Example 2, where the preset user set is correspondingly displayed in a first area of the preset interface, the first area has a first area size when the preset user set is in the first state, the first area has a second area size when the preset user set is in the second state, and the first area size is greater than the second area size.

According to one or more embodiments of the present disclosure, Example 4 is the method according to Example 2, where the first state switch operation includes a first slide operation acting on the first area and/or a second slide operation acting on the preset interface; and/or
the second state switch operation includes a third slide operation acting on the first area, or a click operation on the preset user set.

According to one or more embodiments of the present disclosure, Example 5 is the method according to Example 1, where the display state of the preset user set includes a first state and a second state, and the method further includes:
in the first state, displaying a user identification of at least one preset user in the preset user set; and/or
in the second state, displaying a user identification of at least one preset user in a preset state and/or a media content generation control in the preset user set.

According to one or more embodiments of the present disclosure, Example 6 is the method according to Example 5, where in the first state, the preset user in the preset state in the preset user set is indicated by first indication information; and/or in the second state, the preset user in the preset state in the preset user set is indicated by second indication information.

According to one or more embodiments of the present disclosure, Example 7 is the method according to Example 6, where the first indication information includes a preset identification displayed in association with the user identification, and/or the second indication information includes character information.

According to one or more embodiments of the present disclosure, Example 8 is the method according to Example 6, where the preset user in the preset state includes a preset user with preset media content, and the preset media content includes media content that the current user has not viewed.

According to one or more embodiments of the present disclosure, Example 9 is the method according to Example 5, where in the first state and in the second state, user identifications in the preset user set have different arrangements, the arrangements including flat arrangement and/or overlapping arrangement; and/or
in the first state and in the second state, different numbers of user identifications are displayed in the preset user set.

According to one or more embodiments of the present disclosure, Example 10 is the method according to any one of Examples 1-9, where after the displaying the preset user set in the preset interface, the method further includes at least one of the following:
in response to a media content display operation for a first user among the at least one preset user, displaying a media content display interface, and displaying first media content posted by the first user in the media content display interface;
in response to a media content generation operation acting on the preset interface, displaying a media content generation interface, where the media content generation interface is used to generate media content;
in response to a first conversation operation for a second user among the at least one preset user, displaying a conversation area corresponding to the second user in the preset interface, where the conversation area is used for the current user to input and send conversation information;
in response to a second conversation operation for a third user among the at least one preset user, sending preset conversation information to the third user, where the preset conversation information includes a preset expression picture and/or preset characters; or
in response to a personal interface display operation for a fourth user among the at least one preset user, displaying a personal interface of the fourth user.

According to one or more embodiments of the present disclosure, Example 11 is the method according to Example 10, where after the displaying the first media content posted by the first user in the media content display interface, the method further includes at least one of the following:
in response to a first media content switch operation acting on the media content display interface, switching the media content displayed in the media content display interface to second media content posted by the first user; or
in response to a second media content switch operation acting on the media content display interface, switching the media content displayed in the media content display interface to third media content posted by a fifth user, where the fifth user is included in the at least one preset user.

According to one or more embodiments of the present disclosure, Example 12 is the method according to Example 11, where the first media content switch operation includes a first slide operation in a first direction, and/or the second media content switch operation includes a second slide operation in a second direction.

According to one or more embodiments of the present disclosure, Example 13 is the method according to Example 11, where the first media content, the second media content, and the third media content are all preset media content.

According to one or more embodiments of the present disclosure, Example 14 is the method according to Example 10, where the media content generation operation includes at least one of a first generation operation, a second generation operation, and a third generation operation, where the first generation operation acts on a user identification of the current user, the second generation operation acts on a media content generation control displayed in the preset user set, the third generation operation acts on a second area of the preset interface, and the third generation operation is a slide operation.

According to one or more embodiments of the present disclosure, Example 15 is the method according to Example 10, where at least one of the first conversation operation, the second conversation operation, and the personal interface display operation acts on a user identification of a corresponding user, or acts on a control panel of a corresponding preset user.

According to one or more embodiments of the present disclosure, Example 16 is the method according to Example 15, where after the displaying the preset user set in the preset interface, the method further includes:
in response to a panel display operation for the user identification of the preset user, displaying a control panel of a preset user corresponding to the panel display operation, and displaying at least one interactive control in the control panel, where the at least one interactive control includes at least one of a first conversation control, a second conversation control, and a personal interface display control, the first conversation control is used to trigger to perform the first conversation operation for a corresponding preset user, the second conversation control is used to trigger to perform the second conversation operation for a corresponding preset user, and the personal interface display control is used to trigger to perform the personal interface display operation for a corresponding preset user.

According to one or more embodiments of the present disclosure, Example 17 is the method according to Example 10, where after the displaying the conversation area corresponding to the second user in the preset interface, the method further includes:
in response to a conversation area switch operation, switching a current conversation area to a conversation area corresponding to a sixth user.

According to one or more embodiments of the present disclosure, Example 18 is the method according to any one of Examples 1-9, where the displaying the preset user set in the preset interface includes:
displaying the preset user set in a first area of the preset interface, and displaying fourth media content posted by a seventh user among the at least one preset user in a third area of the preset interface.

According to one or more embodiments of the present disclosure, Example 19 provides an interface display apparatus, including:
an operation receiving module, configured to receive a display operation for a preset interface;
a preset interface display module, configured to, in response to the display operation, display the preset interface, and display a preset user set in the preset interface, where the preset user set includes at least one preset user, the preset user includes a current user and at least one associated user of the current user, and the preset user set is used to trigger display of media content posted by the preset user in a media content display interface and/or to trigger generation of media content; and
a state switch module, configured to, in response to a state switch instruction for the preset user set, switch a display state of the preset user set.

According to one or more embodiments of the present disclosure, Example 20 provides an electronic device, including:
one or more processors; and
a memory, configured to store one or more programs,
where the one or more programs, when executed by the one or more processors, cause the one or more processors to implement the interface display method according to any one of Examples 1-18.

According to one or more embodiments of the present disclosure, Example 21 provides a computer-readable storage medium, on which a computer program is stored, where the program, when executed by a processor, implements the interface display method according to any one of Examples 1-18.

The above description is only preferred embodiments of the present disclosure and an explanation of the applied technical principles. Those skilled in the art should understand that the disclosure scope involved in the present disclosure is not limited to the technical solutions formed by the specific combination of the above technical features, and should also cover other technical solutions formed by any combination of the above technical features or their equivalent features without departing from the above disclosure concept. For example, the above features and the technical features with similar functions disclosed in (but not limited to) the present disclosure may be replaced each other to form a technical solution.

In addition, although operations are depicted in a particular order, this should not be understood as requiring these operations to be performed in the particular order shown or in a sequential order. Under certain circumstances, multitasking and parallel processing may be advantageous. Likewise, although the above discussion contains a number of specific implementation details, these should not be construed as limiting the scope of the present disclosure. Certain features that are described in the context of separate embodiments may also be implemented in combination in a single embodiment. Conversely, various features described in the context of a single embodiment may also be implemented in a plurality of embodiments individually or in any suitable sub-combination.

Although the subject matter has been described in language specific to structural features and/or logical actions of the method, it should be understood that the subject matter defined in the appended claims is not necessarily limited to the specific features or actions described above. Conversely, the specific features and actions described above are merely exemplary forms of implementing the claims.

## Claims

1. An interface display method, comprising:
displaying, in response to a display operation on a preset interface, the preset interface;
displaying a preset user set in the preset interface, the preset user set comprising at least one preset user, the preset user comprising a current user and at least one associated user of the current user, and the preset user set being configured to trigger display of media content posted by the preset user in a media content display interface and/or to trigger generation of media content; and
switching, in response to a state switch instruction for the preset user set, a display state of the preset user set.

2. The method of claim 1, further comprising:
simultaneously displaying, in the preset interface, the preset user set and at least one piece of media content posted by the preset user in the preset user set.

3. The method of claim 1, wherein the switching, in response to the state switch instruction for the preset user set, the display state of the preset user set comprises:
switching, in response to a first state switch operation for the preset user set, the preset user set from a first state to a second state; and/or
switching, in response to a second state switch operation for the preset user set, the preset user set from the second state to the first state.

4. The method of claim 3, wherein the preset user set is correspondingly displayed within a first area of the preset interface, the first area has a first area size in response to the preset user set being in the first state, the first area has a second area size in response to the preset user set being in the second state, and the first area size is greater than the second area size.

5. The method of claim 3, wherein the first state switch operation comprises a first slide operation acting on a first area and/or a second slide operation acting on the preset interface; and/or
the second state switch operation comprises a third slide operation acting on the first area, or a click operation on the preset user set.

6. The method of claim 1, wherein the display state of the preset user set comprises a first state and a second state, and the method further comprises:
displaying a user identification of at least one preset user in the preset user set in the first state; and/or
displaying a user identification of at least one preset user in a preset state and/or a media content generation control in the preset user set in the second state.

7. The method of claim 6, wherein in the first state, the preset user in the preset state in the preset user set is indicated by first indication information; and/or in the second state, the preset user in the preset state in the preset user set is indicated by second indication information.

8. The method of claim 7, wherein the first indication information comprises a preset identification displayed in association with the user identification, and/or the second indication information comprises character information.

9. The method of claim 7, wherein the preset user in the preset state comprises a preset user with preset media content, and the preset media content comprises media content that the current user has not viewed.

10. The method of claim 6, wherein in the first state and in the second state, user identifications in the preset user set have different arrangements, the arrangements comprising a flat arrangement and/or overlapping arrangement; and/or
in the first state and in the second state, different numbers of user identifications are displayed in the preset user set.

11. The method of any of claims 1-10, wherein after displaying the preset user set in the preset interface, the method further comprises at least one of the following:
displaying, in response to a media content display operation for a first user among the at least one preset user, a media content display interface, and displaying first media content posted by the first user in the media content display interface;
displaying, in response to a media content generation operation acting on the preset interface, a media content generation interface, the media content generation interface being used to generate media content;
displaying, in response to a first conversation operation for a second user among the at least one preset user, a conversation area corresponding to the second user in the preset interface, the conversation area being used for the current user to input and send conversation information;
sending, in response to a second conversation operation for a third user among the at least one preset user, preset conversation information to the third user, the preset conversation information comprising a preset expression picture and/or preset characters; or
displaying, in response to a personal interface display operation for a fourth user among the at least one preset user, a personal interface of the fourth user.

12. The method of claim 11, wherein after displaying the first media content posted by the first user in the media content display interface, the method further comprises at least one of the following:
switching, in response to a first media content switch operation acting on the media content display interface, the media content displayed in the media content display interface to second media content posted by the first user; or
switching, in response to a second media content switch operation acting on the media content display interface, the media content displayed in the media content display interface to third media content posted by a fifth user, the fifth user being comprised in the at least one preset user.

13. The method of claim 12, wherein the first media content switch operation comprises a first slide operation in a first direction, and/or the second media content switch operation comprises a second slide operation in a second direction.

14. The method of claim 12, wherein the first media content, the second media content, and the third media content are preset media content.

15. The method of claim 11, wherein the media content generation operation comprises at least one of a first generation operation, a second generation operation, and a third generation operation, wherein the first generation operation acts on a user identification of the current user, the second generation operation acts on a media content generation control displayed in the preset user set, the third generation operation acts on a second area of the preset interface, and the third generation operation is a slide operation.

16. The method of claim 11, wherein at least one of the first conversation operation, the second conversation operation, and the personal interface display operation acts on a user identification of a corresponding user, or acts on a control panel of a corresponding preset user.

17. The method of claim 16, wherein after displaying the preset user set in the preset interface, the method further comprises:
displaying, in response to a panel display operation for the user identification of the preset user, a control panel of a preset user corresponding to the panel display operation, and displaying at least one interactive control in the control panel, wherein the at least one interactive control comprises at least one of a first conversation control, a second conversation control, and a personal interface display control, the first conversation control is configured to trigger to perform the first conversation operation for a corresponding preset user, the second conversation control is configured to trigger to perform the second conversation operation for a corresponding preset user, and the personal interface display control is configured to trigger to perform the personal interface display operation for a corresponding preset user.

18. The method of claim 11, wherein after displaying the conversation area corresponding to the second user in the preset interface, the method further comprises:
switching, in response to a conversation area switch operation, a current conversation area to a conversation area corresponding to a sixth user.

19. The method of any of claims 1-10, wherein displaying the preset user set in the preset interface comprises:
displaying the preset user set in a first area of the preset interface, and displaying fourth media content posted by a seventh user among the at least one preset user in a third area of the preset interface.

20. An interface display apparatus, comprising:
a preset interface display module, configured to display a preset interface in response to a display operation for the preset interface; and
display a preset user set in the preset interface, wherein the preset user set comprises at least one preset user, the preset user comprises a current user and at least one associated user of the current user, and the preset user set is configured to trigger display of media content posted by the preset user in a media content display interface and/or to trigger generation of media content; and
a state switch module, configured to switch, in response to a state switch instruction for the preset user set, a display state of the preset user set.

21. An electronic device, comprising:
at least one processor; and
a memory communicatively connected to the at least one processor;
wherein the memory is stored with a computer program executable by the at least one processor, and the computer program, when executed by the at least one processor, causes the at least one processor to be capable of performing the interface display method of any of claims 1-19.

22. A computer-readable storage medium, wherein the computer-readable storage medium is stored with computer instructions, and the computer instructions are used to, when executed by a processor, implement the interface display method of any of claims 1-19.
